# EUROPEAN PATENT APPLICATION

(11) **EP 3 407 184 A2**
(43) Date of publication of application: **28.11.2018**
(21) Application number: 18172607.6
(22) Date of filing: 16.05.2018
(51) Int. Cl.: G06F 9/30

(54) **NEAR MEMORY COMPUTING ARCHITECTURE**

(30) Priority: 17.05.2017 US 201715597757
(71) Applicant: Hewlett Packard Enterprise Development L.P., Houston, TX 77070 (US)
(72) Inventor: Warner, Craig, PLANO, TX Texas 75024 (US); Cai, Qiong, PALO ALTO, CA California 94304-1100 (US); Faraboschi, Paolo, PALO ALTO, CA California 94304-1100 (US); Lesartre, Gregg B, FORT COLLINS, CO Colorado 80528-9544 (US)
(74) Representative: ZBM Patents - Zea, Barlocci & Markvardsen

(57) **Abstract**

In one example in accordance with the present disclosure, a compute engine block may comprise a data port connecting a processing core to a data cache, wherein the data port receives requests for accessing a memory and a data communication pathway to enable servicing of data requests of the memory. The processing core may be configured to identify a value in a predetermined address range of a first data request and adjust the bit size of a load instruction used by the processing core when a first value is identified.

## Description

### BACKGROUND

Data center power consumption may be a very important factor to customers and is becoming more important as hardware and software costs drop. In some situations, a large portion of a data center's energy may be spent moving data from storage to compute and back to storage.

### BRIEF DESCRIPTION OF THE DRAWINGS

The following detailed description references the drawings, wherein:
FIG. 1 is a block diagram of an example system incorporating a near memory computing architecture;
FIG. 2 is a flowchart of an example method for performing replacement functionality of a processing core;
FIG. 3 is a flowchart of an example compute engine block incorporating a near memory computing architecture; and
FIG. 4 is a flowchart of an example system incorporating a near memory computing architecture.

### DETAILED DESCRIPTION

Current system on a chip (SoC) processors may be tailored for directly attached memory. The address space of these SoC processors may be limited, and their system interfaces may assume main memory is less than 100ns away. Certain systems, however, may be designed to address large pools of fabric-attached memory, which may not be compatible with the fundamental assumptions of the current SoCs processors.

The systems and methods discussed herein use programmable cores embedded in the module-level memory controller to implement near-data processing. Near-data processing is a technique that moves certain functions, such as simple data movements, away from the CPUs, and preserve the CPU-memory bandwidth for more important operations. Near memory processors (NMPs) may have different performance characteristics from standard SoC processors, for example, lower memory access latency, more energy efficient memory access and computation, and lower computing capability.

The systems and methods discussed herein use micro-controller design that may be capable of rapidly scanning memory even in applications where the memory latency is hundreds of nano-seconds. In some aspects, the micro-controller designed may support the RISC-V instruction set. The system and methods described herein may utilize a RISC-V processing core and include additional features, such as a network on chip (NoC) interface and remote memory interface. Additionally, the design of the architecture may allow new features to be added based on observed values in memory and without introducing any changes which would cause recompilation of a software tool chain. The design discussed herein may be able to reduce power since fewer transistor have to switch to perform the computation.

An example compute engine block incorporating a near memory computing architecture may comprise a compute engine block may comprise a data port connecting a processing core to a data cache, wherein the data port receives requests for accessing a memory and a data communication pathway to enable servicing of data requests of the memory. The processing core may be configured to identify a value in a predetermined address range of a first data request and adjust the bit size of a load instruction used by the processing core when a first value is identified.

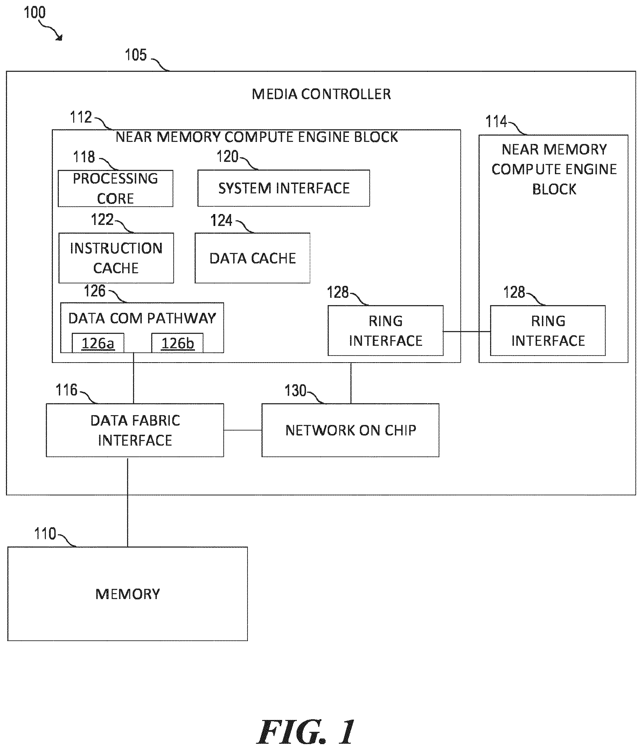

Fig. 1 is an example system 100 for near memory computing. System 100 may include a media controller 105 and a memory 110. Memory controller 105 may include compute engine blocks 112, 114 and a data fabric 116. Each of compute engine blocks 112 114 may include a processing core 118, a system interface 120, an instruction cache 122, a data cache 124, a data communication pathway 126 and a ring interface 128. Although system 100 includes two compute engine blocks, this is for illustrative purposes, and systems may have greater or fewer number of compute engine blocks. Moreover, although compute engine block 114 is pictured with ring interface 128, any of the compute blocks may have any combination of elements 118, 120, 122, 124, 126, 128 and/or additional components.

Memory 110 may be used to store data accessed by the processing core 118. Memory 110 may be accessed by the processing core via the data fabric interface 116. The memory 110 may include any volatile memory, non-volatile memory, or any suitable combination of volatile and non-volatile memory. Memory 110 may comprise, for example, may be, for example, Random Access Memory (RAM), an Electrically-Erasable Programmable Read-Only Memory (EEPROM), a storage drive, an optical disc, and/or other suitable memory. Memory 110 may also include a random access non-volatile memory that can retain content when the power is off.

Processing core 118 may be an integer-only, in-order, RISC-V processor. Processing core 118 may have 32 and/or 256 bit Integer registers, support for 64 bit arithmetic operations and 256 bit logical arithmetic operations. Processing core may also include 56 bit physical address and a 5 stage, in-order pipeline. Using 56 bit physical addressing may enable the core to directly access memory, such as for example, large amounts of NVM memory, without translation. Processing core 118 may also support memory commitment management that tracks the number of outstanding write operations being performed. By tracking the number of outstanding writes, the processing core 118 may stall when a RISC-V architected FENCE instruction is executed. A FENCE operation is a data flag used to preserve ordering in memory operations.

Processing core 118 may be able to adjust the operation mode based on the physical address. Specifically, processing core 118 may be configured to identify a value in a predetermined address range of a data request and adjust behavior of the processing core based on the value. The predetermined address range may be used adjusting the operation mode instead of other purposes. For example, processing core 118 may identify the three most significant address bits of an address range and adjust behavior based on the value observed. In this example, the three most significant address bits may not be used for normal address access. In this manner, new features may be added to the system without introducing any changes which would cause recompilation of a software tool chain.

The meaning of the value in the predetermined address range may be defined in the hardware synthesis of the processing core. The standard hardware implementation of the processing core may be adapted to recognize the values in the predetermined address range, adapt the performance of the processor core according to the values and/or strip the values such that the values in the predetermined address range are not forwarded to the physical memory. For example, if the processing core is a RISC-V processor, the standard compiler may be used and adapted to recognize values in the predetermined address range.

References to the address range enhancements may be included in precompiled code. Accordingly, whoever is writing the code may choose to include values in the predetermined address range in order to invoke the enhancements discussed herein. Furthermore, addresses that vary in these upper address bits will alias to the same physical memory address (once they are stripped off by the processor), the upper address bits are not forwarded to the physical memory. Once the code is written, it can be fed to the standard compiler, such as the RISC-V compiler, to create the machine code that the processor fetches and executes to perform the coded task. As used herein, standard compiler refers to the code compiler that takes software code and converts it to machine code that the processing core actually runs.

Processing core 118 may receive an instruction to perform a default operation. Before performing the default operation, however, the processing core 118 may determine if any values exist in a predetermined address range of the instruction. Processing core 118 may determine a replacement functionality based on the value perform the replacement functionality instead of the default functionality. Example features that may be added in this way include cache line flush, large register load/store, store without fetch, atomic operations, hot path CSR load/store. These features will be described in further detail below.

A cache line flush operation may allow the processing core 118 to move modified cache lines to memory. The modified cache line flush operation may be associated with a first value. The first value may be, for example, the value of the three most significant bits of a memory address. If the processing core identifies the first value in a predetermined memory address, the processing core may perform the cache line flush instead of a default operation. In one aspect, the processing core may perform the cache line flush instead of a default load operation.

A large register load/store operation may be a load and/or store operation that operates with a number of bits different than the default number of bits used by the processing core. The number of bits may be larger or smaller than the default. The large register load/store operation may be associated with a second value. If the processing core identifies the second value in a predetermined memory address, the processing core may perform the large register load/store instead of a default operation. In one aspect, the default operation may be a load/store operation with a default number of bits, such as 32. Upon identifying the second value, the processing core 118 may perform a load/store operation of a different number of bits, such as 256, instead of the default number of 32.

A store without fetch operation may store and/or allocate memory in a data cache without fetching from memory. More specifically, store without fetch operation may cause the processing to store a line of data to a location in the memory without reading an existing line of data currently stored in the location. The store without fetch operation may be associated with a third value. If the processing core identifies the third value in a predetermined memory address, the processing core may perform the store without fetch instead of a default operation. In one aspect, the processing core may perform the store without fetch instead of a default store operation.

An atomic operation is an operation that completes in a single step relative to other threads. The other threads see the steps of the atomic operation as happening instantaneously. As used herein atomic operation may refer to a set of atomic operations associated with a computing platform. For example, atomic operations may be atomic operations associated with the Gen-Z open systems Interconnect. In some aspects, the atomic type may be controlled with a CSR (Control and Status Register). The atomic operations may be associated with a fourth value. If the processing core identifies the fourth value in a predetermined memory address, the processing core may perform the atomic operation instead of a default operation.

A hot path CSR load/store may load or store to core local structures. The atomic operations may be associated with a fifth value. If the processing core identifies the fifth value in a predetermined memory address, the processing core may perform the hot path CSR load/store instead of a default operation, such as a default load/store operation.

In some aspects, memory 110 may also and/or alternatively be accessed by other processors. For example, memory 110 may be directly accessed by a system host processor or processors. A host processor may fill the work queue of system 100 and consumes the results from the completion queue. These queues may be in the host nodes in the directly attached dynamic random-access memory (DRAM), in the modules memory, etc. In some aspects, system 100 may also include simultaneous support of multiple hosts, each host having access to all or part of the modules memory, and each independently managing separate work queues.

System interface 120 may receive requests for accessing a memory. System interface may have wide data ports. As used herein, "wide data ports" refers to a connection between the processing core 118 and the data cache 124. By loading and processing a large amount of data, such as 256 bits of data, fewer processor instructions may be required to operate on a cache line's worth of data (e.g. 64 bytes of data). In some aspects, the system interface 120 may support 32 outstanding cache line requests to memory (to fill the data cache). In this manner, the system interface 120 may allow for overlapping of enough parallel accesses to memory to hide the latency required to access each individual cache line from memory and therefore fully use the bandwidth provided by the memory. In other words, a wide data port may allow the processing core to access more data at a time, allowing one thread running at a lower frequency (i.e. under 1 GHz), to operate at high bandwidth speeds supported by the memory. The data ports may be, for example, 256 bits wide.

System interface 120 may allow 32 outstanding cache line sized requests per processing core. A system interface 120 with a large number of outstanding requests may enable each processing core to move data at high rates. Moreover, by making each general purpose registers 256 bits wide and extending the load and store instructions (as described above in reference to processing core 118), and designing the data cache ports to be wide, the processing core(s) may be able to move data at high speeds, such as several Giga-bytes per second.

Instruction cache 122 may be a four way cache having a permanent region that cannot be evicted from the instruction cache during normal operation of the compute engine block. A plurality of instructions for the processing core are stored on the permanent region, the plurality of instructions including an instruction for a load instruction. The instruction cache may be designed so some location can't be evicted from the cache, thus making performance more predictable. The no eviction region may be used to ensure that instructions required to provide certain library functions to run in the near memory compute engine block 112 are guaranteed to be present. By ensuring that these instructions are present, saving complexity to handle a miss flow and ensuring a higher level of operation performance

The library functions stored in the no-eviction region may include (1) a "data move" operation that moves data from one range of memory address to another, (2) a function to access data in a range, and compare it to a provided pattern, (3) a function that accesses two blocks of data (two vectors), adds the blocks and writes the blocks back or to a third location, etc. When called, these library functions may be run by using the proper code for that function that has been preloaded into the no eviction portion of the cache. For example, function code for a "move" function might be a simple for loop, read a, write b while progressing through the specified address range. Additionally the function code may include additional instructions that check permission, insert access codes, or other such security and correctness safeguards. By providing these functions in a library in the no eviction region instead of having the node requesting the work provide a code sequence, it may be ensured that allowed operations are supported, and insure the performance of library routines. Providing certain functions in the library of the no eviction region may also help protect library code from malicious modifications.

In some aspects, the cache content may be controlled by external firmware, so code is secure and pre-loaded. Data cache 124 may be a four way cache having wide read and write ports. The wide read and write ports may be, for example, 256 bits wide. The system interface and cache may allow each processing core to be powerful enough to scan local memory at a high bandwidth, so that operations like copy, zero, and scan-for-pattern don't require parallelization for acceptable performance.

Data communication pathway 126 may access a network-on-chip interface to enable low latency servicing of data requests of the memory. The low latency servicing may allow for low latency communication between the near memory compute engine block 112 and another processor, such as a processor that is part of a system on chip, such as the media controller 105. Under some circumstances (such as if the overhead on processing core 118 is too high) certain tasks may be offloaded to the processor of the system on a chip. In some aspects, the low latency may be on the order of nanoseconds. In contrast, if the near memory compute engine block 112 was connected via Memory-mapped input output (MMIO) operations, the offloading may be on the order of seconds.

The data communication pathway 126 may utilize one or more standardized data communication standards, such as Gen-Z open systems interconnect. Data communication pathway 126 may formulate, and/or interpret the packet header (and full packet) information on behalf of the processing core 118, offloading certain activities from the processing core 118. For example, data communication pathway 126 may include requester 126a and responder 126b. The requester 126a may accepts memory accesses from the processing core 118, formulates the request transaction for the data communication standard and tracks progress of the transaction. Requester 126a may further gather up the transaction response and put the returned data into the data cache (i.e. read) and/or retire the transaction (i.e. completed write). Responder 126a may accept inbound requests, steering transactions for the near memory computing architecture appropriately to control registers or other resources of the near memory computing architecture. Media controller 105 may include a data fabric interface 116 and a network on chip 130. The data fabric 116 interface may have links for connecting to memory. The network on chip 130 may be used as an on-die interconnect that connects the different elements of near memory compute engine block 112 (such as elements 118, 120, 122, 124, 126, etc.).

A ring interface 128 may be used for connecting near memory compute engine blocks. By using the ring interface, processing cores and/or additional compute engine blocks may be added to the media controller without new block physical work or additional verification efforts.

In some aspects, computations may occasionally be performed on data residing on other NVM modules. Accordingly, a data computing block can access NVM on a different module with a load/store/flush instruction sequence to read/modify/commit data on the remote NVM module. By implementing the cross-module communication with a large address space and load/store/flush instruction sequence, the utilization of the local caches for remote NVM module reference can be improved, thus increasing performance and simplifying the accelerator programming model. In some aspects, not every byte of storage on a memory module may be sharable, so each module implements a remote access firewall which can protect regions of local NVM from remote access.

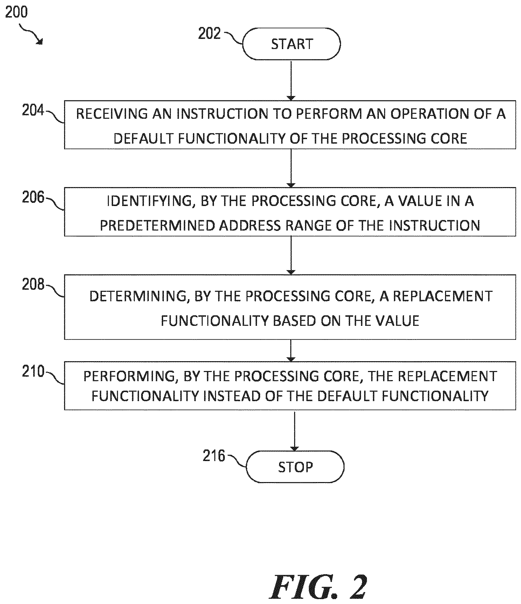

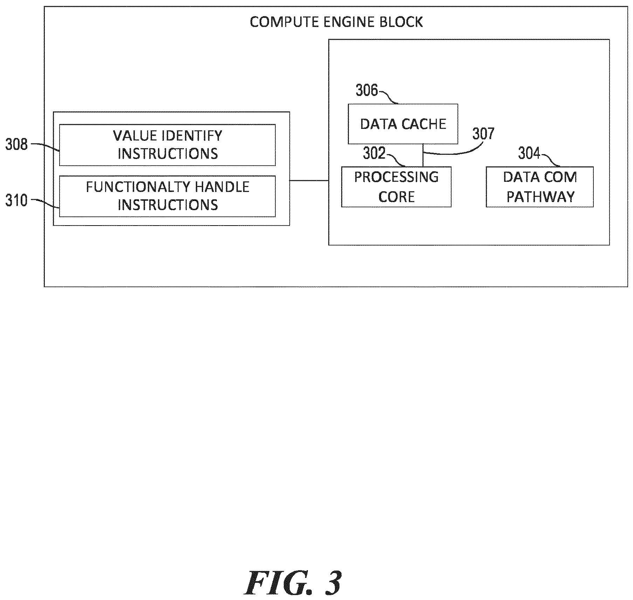

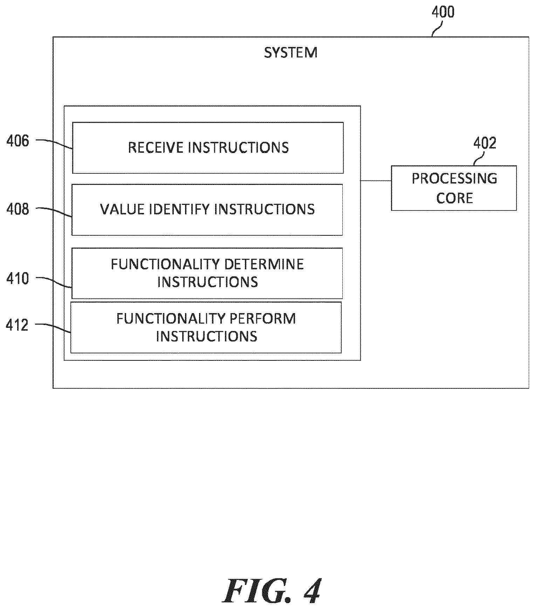

FIG. 2 is a flowchart of an example method 200 for performing replacement functionality of a processing core in accordance with various examples of the present disclosure. The flowchart represent processes that may be utilized in conjunction with various systems and devices as discussed with reference to the preceding figures, such as, for example, system 100 described in reference to Fig. 1, compute engine block 300 described in reference to Fig. 3 and/or system 400 described in reference to Fig. 4. While illustrated in a particular order, the flowchart is not intended to be so limited. Rather, it is expressly contemplated that various processes may occur in different orders and/or simultaneously with other processes than those illustrated. As such, the sequence of operations described in connection with FIG. 2 are examples and are not intended to be limiting. Additional or fewer operations or combinations of operations may be used or may vary without departing from the scope of the disclosed examples. Thus, the present disclosure merely sets forth possible examples of implementations, and many variations and modifications may be made to the described examples.

Method 200 may start at block 202 and continue to block 204, where the method 200 may include receiving an instruction to perform an operation of a default functionality of the processing core. At block 206, the method may include identifying, by the processing core, a value in a predetermined address range of the instruction. The predetermined address range includes three most significant address bits.

At block 208, the method may include determining, by the processing core, a replacement functionality based on the value. The value may cause the processing core to adjust behavior without introducing any changes which would cause recompilation of a software tool chain.

A first value may cause the processing core to perform a load instruction with a bit size that is different than a default bit size. The first value may also cause the processing core to perform a store instruction with a bit size that is different than the default bit size. The bit size of the load and/or store instruction may be 256 bits. A second value may cause the processing core to perform a flush operation instead of a load operation. A third value may cause the processing core to store a line of data to a location in the memory without fetching an existing line of data currently stored in the location. A fourth value may cause the processing core to operate in a default mode.

At block 210, the method may include performing, by the processing core, the replacement functionality instead of the default functionality. The method may continue to block 212, where the method may end.

FIG. 3 is a block diagram of an example compute engine block 300 incorporating a near memory compute architecture. System 300 may include a processing core 302, a data communication pathway 304,and a data cache 306 that may be coupled to each other through a communication link (e.g., a bus). Data communication pathway 304 may enable low latency servicing of data requests of the memory. Data communication pathway 304 may read packet header information including packet length and starting address. Data communication pathway 304 may be similar to data communication pathway 126 discussed above in reference to Fig. 1. Processing core 302 may be connected to data cache 306 via a wide data port 307. Data cache 306 may be similar to data cache 124 discussed above in reference to Fig. 1. As described above, wide data port 307 may receive requests for accessing a memory. In some aspects, data cache 308 may be part of a system interface. System interface may allow 32 outstanding cache line sized requests per processing core. System interface may be similar to system interface 120 discussed above in reference to Fig. 1. Processing core 302 may include one or multiple Central Processing Units (CPU) or another suitable hardware processors. Processing core 302 may be configured to perform instructions, including value identify instructions 308 and functionality handle instructions 310. The instructions of system 300 may be implemented in the form of executable instructions stored on a memory and executed by at least one processor of system 300. Memory 304 may be non-transitory.

The memory may include any volatile memory, non-volatile memory, or any suitable combination of volatile and non-volatile memory. Memory may comprise, for example, may be, for example, Random Access Memory (RAM), an Electrically-Erasable Programmable Read-Only Memory (EEPROM), a storage drive, an optical disc, and/or other suitable memory. Memory may also include a random access non-volatile memory that can retain content when the power is off. Each of the components of system 300 may be implemented in the form of at least one hardware device including electronic circuitry for implementing the functionality of the component.

In some aspects, compute engine block 300 may further include an instruction cache. The instruction cache may have a permanent region that is not evicted from the instruction cache during normal operation of the compute engine block. A plurality of instructions for the processing core are stored on the permanent region, the plurality of instructions including an instruction for a load instruction. The instruction cache may be similar to instruction cache 122 discussed above in reference to Fig. 1.

Processor 302 may execute value identify instructions 308 to receive an instruction to perform an operation of the processing core. Processor 302 may execute value identify instructions 308 to identify a value in a predetermined address range accessible by the processing core. The predetermined address range may include the three most significant address bits. The value may cause the processing core to adjust behavior without introducing any changes which would cause recompilation of a software tool chain. Processor 302 may execute functionality handle instructions 310 to determine a functionality based on the value and perform the functionality. In some examples, a replacement functionality may be indicated by the value and the processing core may perform the replacement functionality instead of a default functionality.

For example, processing core may adjust the bit size of a load instruction used by the processing core when a first value is identified. In other words, processing core may perform a load instruction with an adjusted bit size value as a replacement functionality for a load instruction with a default bit size. The load instruction with the default bit size may be the default functionality of the processing core.

The first value may also cause the processing core to perform a store instruction with a bit size that is different than the default bit size. The bit size of the load and/or store instruction may be 256 bits. A second value may cause the processing core to perform a flush operation instead of a load operation. A third value may cause the processing core to store a line of data to a location in the memory without fetching an existing line of data currently stored in the location. A fourth value may cause the processing core to operate in a default mode.

FIG. 4 is a block diagram of an example system 400 incorporating a near memory computing architecture. In the example illustrated in FIG. 4, system 400 includes a processing core 402. Although the following descriptions refer to a single processing core, the descriptions may also apply to a system with multiple processing cores. In such examples, the instructions may be distributed (e.g., executed by) across multiple processing cores.

Processor 402 may be at least one central processing unit (CPU), microprocessor, and/or other hardware devices suitable for retrieval and execution of instructions. In the example illustrated in FIG. 4, processor 402 may fetch, decode, and execute instructions 406, 408, 410 and 414 to perform replacement functionality of a processing core. In some examples, instructions 406, 408, 410 and 414 may be stored on a memory. The memory may include any volatile memory, non-volatile memory, or any suitable combination of volatile and non-volatile memory. Memory 504 may comprise, for example, may be, for example, Random Access Memory (RAM), an Electrically-Erasable Programmable Read-Only Memory (EEPROM), a storage drive, an optical disc, and/or other suitable memory. Memory 504 may also include a random access non-volatile memory that can retain content when the power is off. Processor 402 may include at least one electronic circuit comprising a number of electronic components for performing the functionality of at least one of the instructions. With respect to the executable instruction representations (e.g., boxes) described and shown herein, it should be understood that part or all of the executable instructions and/or electronic circuits included within one box may be included in a different box shown in the figures or in a different box not shown.

Referring to FIG. 4, receive instructions 406, when executed by a processor (e.g., 402), may cause system 400 to receive an instruction to perform an operation of the processing core. Value identify instructions 408, when executed by a processor (e.g., 402), may cause system 400 to identify a value in a predetermined address range of the instruction. Functionality determine instructions 410, when executed by a processor (e.g., 402), may cause system 400 to determine a replacement functionality based on the value.

Functionality perform instructions 412, when executed by a processor (e.g., 402), may cause system 400 to perform the replacement functionality. The value may cause the processing core to adjust behavior without introducing any changes which would cause recompilation of a software tool chain. A first value may cause the processing core to perform a load instruction with a bit size that is different than a default bit size. The first value may also cause the processing core to perform a store instruction with a bit size that is different than the default bit size. The bit size of the load and/or store instruction may be 256 bits. A second value may cause the processing core to perform a flush operation instead of a load operation. A third value may cause the processing core to store a line of data to a location in the memory without fetching an existing line of data currently stored in the location. A fourth value may cause the processing core to operate in a default mode.

The foregoing disclosure describes a number of examples of a near memory computing architecture. The disclosed examples may include systems, devices, computer-readable storage media, and methods for implementing a near memory computing architecture. For purposes of explanation, certain examples are described with reference to the components illustrated in FIGS. 1-4. The content type of the illustrated components may overlap, however, and may be present in a fewer or greater number of elements and components. Further, all or part of the content type of illustrated elements may co-exist or be distributed among several geographically dispersed locations. Further, the disclosed examples may be implemented in various environments and are not limited to the illustrated examples.

Further, the sequence of operations described in connection with FIGS. 1-4 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples.

## Claims

1. A method comprising:
receiving an instruction to perform an operation of a default functionality of a processing core;
identifying, by the processing core, a value in a predetermined address range of the instruction;
determining, by the processing core, a replacement functionality based on the value; and:
performing, by the processing core, the replacement functionality instead of the default functionality,
wherein a first value causes the processing core to perform a load instruction with a bit size that is different than a default bit size and
wherein a second value causes the processing core to perform a flush operation instead of a load operation.

2. The method of claim 1 wherein a third value causes the processing core to store a line of data to a location in the memory without reading an existing line of data currently stored in the location.

3. The method of claim 1 wherein a second value causes the processing core to perform a flush operation instead of a load operation.

4. The method of claim 1 wherein a fourth value causes the processing core to operate in a default mode.

5. The method of claim 1 wherein the value causes the processing core to adjust behavior without introducing any changes into the compilation software tool chain.

6. The method of claim 1, wherein the processing core adjusts the bit size of the load instruction used the first value is identified.

7. A system comprising:
a processing core configured to operate according to any of the above claims

8. The system of claim 7 wherein the predetermined address range includes three most significant address bits.

9. The system of claim 7 further comprising:
a data port connecting the processing core to a data cache, wherein the data port receives requests for accessing a memory;
a data communication pathway to enable servicing of data requests of the memory.

10. The system of claim 9 wherein the data communication pathway access a network-on-chip interface.

11. The system of claim 10 wherein the bit size of the load instruction is 256 bits and the network-on-chip interface allows 32 outstanding cache line sized requests per processing core.

12. The system of claim 9 further comprising:
an instruction cache having a permanent region that is not evicted from the instruction cache during normal operation of the system.

13. The system of claim 12, wherein a plurality of instructions for the processing core are stored on the permanent region, the plurality of instructions including an instruction for the load instruction.

14. The system of claim 9, whereby the processing core, the data port and the data communication pathway are comprised in a compute engine block.

15. A computer-readable storage media comprising instructions which cause a processor to operate according to a method according to any of claims 1 to 6.
